# EUROPEAN PATENT APPLICATION

(11) **EP 4 848 543 A1**
(43) Date of publication of application: **02.12.2026**
(21) Application number: 25744901.7
(22) Date of filing: 15.01.2025
(51) Int. Cl.: H02K 9/19

(54) **LIQUID-COOLED MOTOR**

(30) Priority: 26.01.2024 JP 2024010018
(71) Applicant: Sinfonia Technology Co., Ltd., Minato-ku Tokyo 105-8564 (JP)
(72) Inventor: WATANABE, Shunya, Tokyo 105-8564 (JP); SAKAMOTO, Taichi, Tokyo 105-8564 (JP); MIURA, Masahiro, Tokyo 105-8564 (JP); SAKAI, Keijiro, Tokyo 105-8564 (JP); ARUGA, Nobuo, Tokyo 105-8564 (JP); KAWABATA, Toshiaki, Tokyo 105-8564 (JP)
(74) Representative: Angerhausen, Christoph
(86) International application number: PCT/JP2025/000984
(87) International publication number: WO 2025/158971

(57) **Abstract**

The present invention includes: a housing; a rotor that rotates about an axis with respect to the housing; a stator that is fixed to the housing and that generates a magnetic force for rotation with respect to the rotor, at least a portion thereof being made of a material having a coefficient of linear expansion different from that of the housing; a flow path that is provided so as to extend across the end surfaces of the housing and the stator in the axial direction, that is formed in the housing, and through which the cooling liquid passes; an end plate that is disposed facing the flow path; and a fastening member that generates a fastening force in a direction in which the end plate is brought into close contact with the housing and the stator.

## Description

### CROSS-REFERENCE TO RELATED APPLICATION

This application is based upon and claims the benefit of priority from Japanese Patent Application No. 2024-010018, the entire contents of which are incorporated herein by reference.

### TECHNICAL FIELD

The present disclosure relates to a liquid-cooled motor in which a stator is cooled with a cooling liquid.

### BACKGROUND

In recent years, for the electrification of aircraft and automobiles, a demand has existed for lightweight, high-power (high power density) motors. This has resulted in high heat density in a stator core and coils, causing a problem of motor temperature increase. Thus, a method of directly cooling the stator core and coils by circulating cooling oil inside a motor has been adopted.

One example of the cooling method is shown in FIG. 6 of Japanese Patent No. 3882637. In this method, a stator cooling passage is formed by a case (housing), a stator core (stator), and seal rings held in place by snap rings at both axial ends of the stator core, and the stator core and coils are cooled by allowing cooling oil to flow through the stator cooling passage.

Furthermore, in order to fix the stator core to the case, spline teeth are intermittently arranged at equal angle positions in a circumferential direction on both the case and the stator core, and these spline teeth are aligned and fitted together.

### [Prior Art Documents]

### Patent Documents

Patent Document 1: Japanese Patent No. 3882637

A method of fixing a stator core to a case by shrink-fitting is known. In particular, when a case (housing) that accommodates a motor is made of, for example, aluminum or resin to achieve a weight reduction required for electric aircraft applications, a difference in linear expansion occurs between the aluminum or resin and the stator core which is made of a magnetic material different from the aluminum or resin. Therefore, when the stator core is used over a wide temperature range, the fixing of the stator core may loosen. Accordingly, it is necessary to tighten the shrink-fitting tolerance to prevent the fixing from loosening.

However, if the shrink-fitting tolerance is too tight, the stator core may not be able to withstand a stress caused by the tolerance, potentially leading to deformation or buckling of the stator core. In order to suppress this, it is conceivable to increase a radial thickness of the stator core and a thickness of the housing and to adopt a design that allows the stator core to withstand the stress caused by the tolerance. However, this would result in an increase in motor mass. Incidentally, one of the problems arising from increasing the thickness is that the thermal resistance due to heat conduction in the stator core increases, worsening the cooling efficiency.

The present disclosure provides some embodiments of a liquid-cooled motor capable of suppressing an increase in motor mass even when a housing and a stator are made of different materials.

### SUMMARY

According to the present disclosure, a liquid-cooled motor includes: a housing; a rotor configured to rotate about an axis with respect to the housing; a stator fixed to the housing and configured to generate a magnetic force for the rotation with respect to the rotor, at least a portion of the stator being made of a material having a coefficient of linear expansion different from that of the housing; a flow path formed inside the housing to allow a cooling liquid to pass through the flow path; an end plate provided so as to extend across an end surface of each of the housing and the stator in a direction of the axis and arranged to face the flow path; and a fastening member configured to generate a fastening force in a direction in which the end plate is brought into close contact with the housing and the stator.

Furthermore, the liquid-cooled motor of the present disclosure may further include: a partition wall provided between the rotor and the stator along the direction of the axis to define the flow path, wherein the stator may include coils, the stator may be provided with coil slots extending in an axial direction to hold the coils, each of the coil slots may have an in-slot space extending along an entire axial length of the stator, and the in-slot space may constitute a portion of the flow path through which the cooling liquid passes.

Furthermore, in the liquid-cooled motor of the present disclosure, the flow path may have a buffer portion in which a cross-sectional area of a cross-section perpendicular to a direction in which the cooling liquid passes is enlarged.

Furthermore, in the liquid-cooled motor of the present disclosure, a sealing member may be provided between the housing and the end plate to prevent leakage of the cooling liquid.

Furthermore, the flow path may be formed inside the housing to face the stator.

Furthermore, the stator may be fixed between the housing and the end plate such that the flow path is formed by being surrounded by the stator, the housing, and the end plate.

Furthermore, the fastening member may be configured to generate the fastening force in the direction of the axis.

Furthermore, the housing may include a housing body having a side wall portion at one end and an opening at the other end in the direction of the axis, and a lid configured to close the opening of the housing body, the lid may have an inlet through-hole and an outlet through-hole provided at a different position from the inlet through-hole, the inlet through-hole may be a portion through which a supply pipe configured to supply the cooling liquid from outside the motor to the flow path passes, and the outlet through-hole may be in fluid communication with the flow path and may be a portion through which the cooling liquid that has passed through the flow path is discharged to the outside of the motor.

Furthermore, an end space may be formed between an end of the stator in the direction of the axis and the housing, and the housing may have a notch configured to bring the flow path into fluid communication with the end space.

Furthermore, the fastening member may have a length extending over both ends of the stator in the direction of the axis.

Furthermore, the stator may include a bulging portion protruding radially outward.

Furthermore, the housing may have a recess formed radially outward of the bulging portion to face the bulging portion.

Furthermore, the housing may include an inlet and an outlet for the cooling liquid, a guide pipe configured to guide the cooling liquid supplied by a pump from an externally provided storage configured to store the cooling liquid may be connected to the inlet, and a discharge pipe configured to return the cooling liquid, which has cooled the stator, to the storage via a heat exchanger may be connected to the outlet.

### BRIEF DESCRIPTION OF DRAWINGS

FIG. 1 is a view showing a liquid-cooled motor according to a first embodiment of the present disclosure, in which components other than a rotor are shown in cross sections.
FIG. 2 is a view showing a liquid-cooled motor according to a second embodiment of the present disclosure, in which components other than the rotor are shown in cross section.
FIG. 3 is a view showing a liquid-cooled motor according to a third embodiment of the present disclosure, in which components other than the rotor are shown in cross section.
FIG. 4 is a view showing a liquid-cooled motor according to a fourth embodiment of the present disclosure, in which components other than the rotor are shown in cross section.
FIG. 5 is a view showing another embodiment in which an adhesive layer is added to a main part of the liquid-cooled motor according to the first embodiment of the present disclosure.
FIG. 6 is a view showing another liquid-cooled motor with bolt through-holes formed in a stator core, in which components other than the rotor are shown in cross section.
FIG. 7 is a cross-sectional view taken along line VII-VII in FIG. 6.
FIG. 8 is a view showing another liquid-cooled motor in which stator cooling passages are used as bolt through-holes and in which components other than the rotor are shown in cross section.
FIG. 9A is a cross-sectional view of the main part in which a shape of a housing shown in FIG. 7 is modified.
FIG. 9B is a cross-sectional view of the main part in which the shape of the housing shown in FIG. 7 is modified.
FIG. 10 is a block diagram showing a system that combines a liquid-cooled motor according to each embodiment of the present disclosure and a configuration configured to supply a cooling liquid to the liquid-cooled motor.

### DETAILED DESCRIPTION

Embodiments of the liquid-cooled motor (hereinafter, simply referred to as a motor) of the present disclosure will be described based on the drawings.

### <First Embodiment>

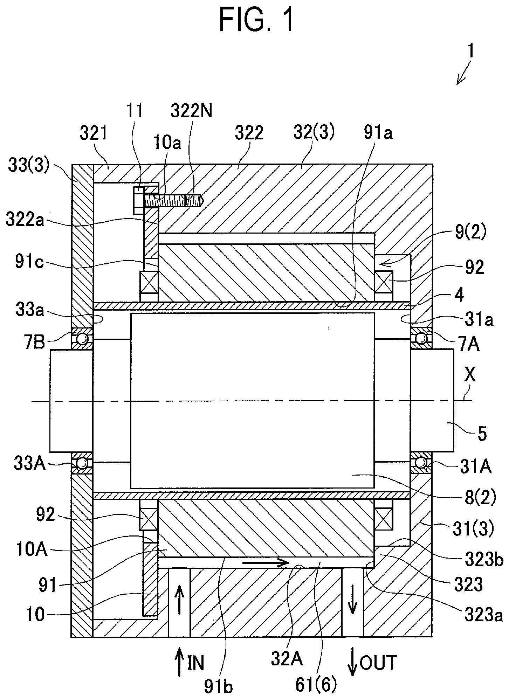

As shown in FIG. 1, the motor 1 includes a housing 3 configured to accommodate a motor part 2 configured to generate power. Inside the housing 3, a partition wall 4 configured to cover a stator 9, which will be described later, is provided. In order to respond to reducing weight, the housing 3 is made of, for example, aluminum, aluminum alloy, titanium alloy, magnesium alloy, metal composite material, carbon fiber composite material (CFRP), or synthetic resin. In the following description, a direction along the axis X of a rotary shaft 5, which will be described later, in FIG. 1 is defined as an axial direction, and a direction perpendicular to the axial direction (a vertical direction in FIG. 1) is defined as a radial direction.

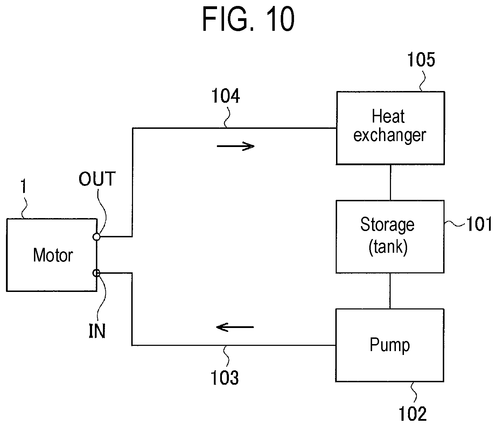

The housing 3 is equipped with an inlet IN and an outlet OUT for a cooling liquid. As shown in FIG. 10 (block diagram), a guide pipe 103 configured to guide the cooling liquid supplied by a pump 102 from a tank 101, which is an external storage configured to store the cooling liquid, is connected to the inlet IN, and a discharge pipe 104 configured to return the cooling liquid, which has been heated by cooling the stator 9 (described later), to the tank 101 via a heat exchanger 105 configured to perform the cooling is connected to the outlet OUT. In the present embodiment, cooling oil is used as the cooling liquid, but water or various other cooling media may also be used.

The motor 1 is constituted as an inner rotor type in which a rotor 8 (described later) is mounted radially inside a stator 9 (described later) so as to rotate integrally with a rotary shaft 5 that is rotatably supported approximately at the center of the housing 3. The motor 1 may be used, for example, as a power source for aircraft electric motors or automobiles, as a power source for actuators of robots and the like, as a power source for pumps or compressors, and as a flywheel energy storage device, or may be used for other purposes.

As shown in FIG. 1, the housing 3 includes a cylindrical housing body 32 having a side wall portion 31 at one axial end (right end in FIG. 1), and a lid 33 configured to close an opening provided at the other axial end (left end in FIG. 1) of the housing body 32. In the present embodiment, as shown in FIG. 1, the inlet IN for the cooling liquid is formed on the other axial end side (left side) in a lower portion (or a portion other than the lower portion, such as an upper portion or a middle portion in the vertical direction) of the housing body 32, and the outlet OUT for the cooling liquid is formed on one axial end side (right side) in the lower portion of the housing body 32. The cooling liquid entering from the inlet IN flows through an annular flow path 6 formed inside the housing 3 toward one axial end side (right side) in FIG. 1 and is discharged to the outside from the outlet OUT. The flow path 6 forms a stator cooling passage 61 configured to cool a stator core 91, which will be described later. In the present embodiment, by arranging the inlet IN and outlet OUT for the cooling liquid on both axial end sides of the stator, a space for generating a flow of the cooling liquid toward the right axial side is increased, and therefore, a cooling effect due to the flow of the cooling liquid is obtained.

The flow path 6 is formed by a radial inner surface 32A of the housing body 32, an end plate 10 described later, a radial outer surface 91b of the stator core 91 described later, and a vertical surface 323a, which is perpendicular to the axial direction, among the vertical surface 323a and a horizontal surface 323b of an annular stepped portion 323 which is formed to protrude from the side wall portion 31 of the housing body 32 toward one axial end (the right end in FIG. 1) of the stator core 91 described later.

A through-hole 31A passing through one axial end (right end in FIG. 1) of the rotary shaft 5 in the axial direction is formed at the radial center of the side wall portion 31 of the housing body 32. Furthermore, a through-hole 33A passing through the other axial end (left end in FIG. 1) of the rotary shaft 5 in the axial direction is formed at the radial center of the lid 33. One end of the rotary shaft 5 passing through the through-hole 31A on one side is rotatably supported in the side wall portion 31 of the housing body 32 via a bearing 7A which is a shaft support. The other end of the rotary shaft 5 passing through the through-hole 33A on another side is rotatably supported in the lid 33 via a bearing 7B which is a shaft support.

The housing body 32 includes a thin-walled portion 321, a thick-walled portion 322, and a stepped portion 323. The thin-walled portion 321 has an opening at its axial left end. The thick-walled portion 322 is thicker than the thin-walled portion 321 and has a space formed therein to accommodate the stator core 91, which will be described later. The stepped portion 323 is formed at the end of the housing body 32 on the side of the side wall portion 31 so that the axial right end of the stator core 91, which will be described later, is brought into contact with the stepped portion 323. It is preferable that an axial left end surface 91c of the stator core 91 accommodated in the thick-walled portion 322 protrudes slightly axially outward (to the left in FIG. 1) with respect to an axial left end surface 322a of the thick-walled portion 322. Therefore, when the end plate 10 is bolted to the housing body 32 as will be described later, the end plate 10 is bent to transmit an axial force to the stator core 91, which makes it possible to seal a space between the end plate 10 and the stator core 91.

The motor part 2 includes the rotor 8 and the stator 9. The rotor 8 is fitted into the rotary shaft 5 integrally rotatably so as to rotate about the axis X with respect to the housing 3. The stator 9 is arranged between the partition wall 4 and the housing body 32. In other words, the stator 9 is located radially outward of the rotor 8. In the rotor 8, a plurality of permanent magnets (not shown) are provided along a circumferential direction. In the present embodiment, a permanent magnet type rotor is used, but any type of rotor such as a wound-type rotor or a cage type rotor of an induction motor may be used.

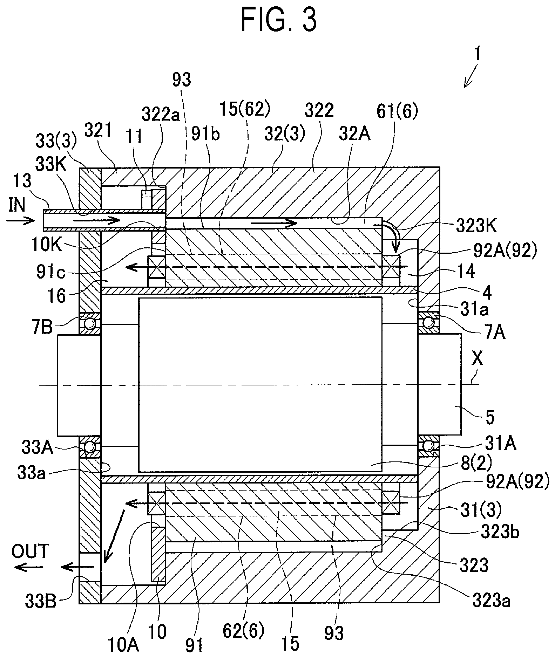

The stator 9 generates a magnetic force to rotate the rotor 8 and includes a stator core 91, coils 92, and an insulating member (not shown). The stator core 91 constitutes a plurality of magnetic poles. The coils 92 are mounted on the stator core 91. The insulating member insulates the stator core 91 from the coils 92. The stator core 91 extends in the axial direction and has teeth (not shown) arranged in the circumferential direction, and coil slots (not shown / *see* coil slots 93 in FIG. 3 according to a third embodiment) configured to hold the coils 92 are formed between the teeth adjacent to each other in the circumferential direction. The coil slots have a plurality of in-slot spaces (not shown / *see* the in-slot spaces 15 in FIG. 3 according to the third embodiment) that extend along an entire axial length of the stator core 91, and the plurality of in-slot spaces constitute portions of the flow path through which the cooling liquid passes, as will be described later. Further, the stator core 91 is constituted by a laminate of electromagnetic steel sheets made of a material (e.g., a soft magnetic material) different from the material of the housing 3. In other words, the stator core 91 is made of a material with a coefficient of linear expansion different from that of the housing 3 (the aforementioned material containing aluminum (metal) or synthetic resin, etc.). In the present embodiment, the stator core 91 is constituted by a laminate of electromagnetic steel sheets, but the stator core 91 may also be made of materials such as silicon steel sheets, Permendur (cobalt steel), permalloy, and the like.

The partition wall 4 is made of glass fiber reinforced plastic (GFRP), which can form a non-magnetic thin-walled cylindrical shape. Glass fiber reinforced plastic (GFRP) has a low coefficient of linear expansion among plastics. The axial direction length of the partition wall 4 is longer than the axial direction length (axial length) of the stator core 91. More specifically, the partition wall 4 is configured to protrude axially outward beyond the axial outer end of the coil 92 that protrudes axially outward of the stator core 91. One axial end of the partition wall 4 (the right end in FIG. 1) comes into contact with the end surface 31a of the side wall portion 31 of the housing body 32, and the other axial end of the partition wall 4 (the left end in FIG. 1) comes into contact with the end surface 33a of the lid 33. Thus, the partition wall 4 separates the space, in which the stator 9 is accommodated, from the space in which the rotor 8 is accommodated. Further, the partition wall 4 is fixed to the entire inner surface 91a of the stator core 91 with an adhesive (not shown). This ensures rigidity of the partition wall 4.

In order to form the aforementioned flow path 6, an end plate 10 is arranged to face the flow path 6. The end plate 10 is made of a metal material (iron, stainless steel, aluminum, etc.) and is configured in a disc shape with a circular through-hole 10A formed at the center thereof. In the end plate 10, a bolt hole 10a through which the shaft portion of a bolt 11 (described later) can pass is formed on its radially outer side. The end plate 10 may also be made of synthetic resin. The end plate 10 is arranged to span the axial left end surface 322a of the thick-walled portion 322 of the housing body 32 and the axial left end surface 91c of the stator core 91. The end plate 10 is brought into close contact with and fixed to the housing 3 and the stator core 91 by the fastening force generated when the shaft portion of the bolt 11, which serves as a fastening member, is passed through the bolt hole 10a and then threadedly coupled to a thread portion 322N formed in the thick-walled portion 322 of the housing body 32. This prevents the cooling liquid from leaking from the flow path 6 due to the fastening force applied to the end plate 10. Therefore, it becomes unnecessary to form spline teeth configured to form flow paths in both the case and the stator core. Furthermore, shrink-fitting to fix the end plate 10 to the housing 3 becomes unnecessary. Thus, it becomes unnecessary to increase the radial thickness of the motor 1, and it is possible to suppress an increase in motor mass. There may be one bolt 11 or two or more bolts 11. If there is one bolt 11, it is desirable to use the same in combination with other means such as fitting. If there are a plurality of bolts 11, it is preferable to arrange the bolts 11 evenly in the circumferential direction.

### <Second Embodiment>

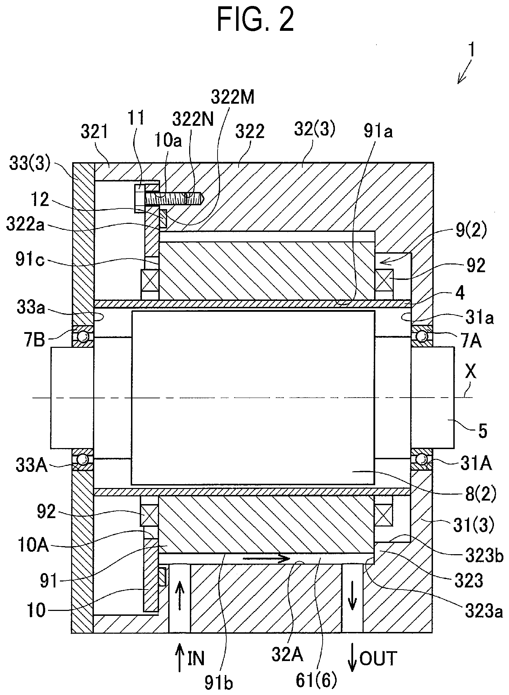

The second embodiment is shown in FIG. 2, and a difference from the first embodiment (FIG. 1) is that a sealing member 12 configured to prevent leakage of the cooling liquid due to temperature changes, etc. is provided between the housing 3 and the end plate 10. A portion of the sealing member 12 is fitted into an annular groove 322M formed in the thick-walled portion 322 of the housing body 32 of the housing 3.

The sealing member 12 is constituted by an annular sealing member (e.g., an O-ring) made of a rubber-like elastic material. Providing the sealing member 12 is preferable because even if a gap occurs between the housing 3 and the end plate 10 due to motor operating conditions or temperature changes caused by a temperature outside the motor, the sealing member 12 may fill the gap, thereby preventing the cooling liquid from leaking.

In FIG. 2, the sealing member 12 is provided only between the housing 3 and the end plate 10, but it is preferable to also provide a sealing member (not shown) between the stator core 91 and the end plate 10. Alternatively, a plurality of sealing members 12 (e.g., a plurality of O-rings arranged concentrically) may be provided between the housing 3 and the end plate 10 in the circumferential direction. The parts not described with reference to FIG. 2 are the same as those shown in FIG. 1, and are designated by the same reference numerals as those of FIG. 1 with the descriptions thereof omitted.

### <Third Embodiment>

The third embodiment is shown in FIG. 3, and a difference from the first embodiment (FIG. 1) is that the cooling liquid is supplied to an inlet at one longitudinal end (the left end in FIG. 3) of the stator cooling passage 61, which constitutes the flow path 6, in the same direction as a flow direction of the cooling liquid flowing through the stator cooling passage 61. This makes the flow of the cooling liquid smoother. As a result, a pressure loss can be reduced, a discharge pressure of the pump configured to supply the cooling liquid can be reduced, and efficiency of the system can be improved. Another difference is that the cooling liquid is allowed to flow from the stator cooling passage 61 to a coil cooling passage 62, which will be described later. Therefore, the partition wall 4 is provided such that the cooling liquid does not leak radially inward from both axial ends of the partition wall 4. The cooling liquid is supplied to the flow path 6 via a cylindrical oil supply port (oil supply pipe) 13 that passes through a through-hole 33K formed in the lid 33 and has the axial right end connected to the through-hole 10K formed in the end plate 10. The supplied cooling liquid moves from one end of the flow path 6 (the right end in FIG. 3) in a flow direction through a notch 323K formed at a portion of the stepped portion 323 of the housing body 32 in the circumferential direction to an annular first space 14 formed around the axis X constituted by the stator core 91, the stepped portion 323, the side wall portion 31, and the partition wall 4. That is, the notch 323K has a space that is in fluid communication with the stator cooling passage 61 and the first space 14. The cooling liquid that has moved to the first space 14 enters the in-slot spaces 15 of the plurality of coil slots 93 formed in the stator core 91, moves to an annular second space 16 formed around the axis X at the left end in FIG. 3, and is discharged to the outside through an outlet 33B formed in the lid 33.

The in-slot spaces 15 constitute the coil cooling passages 62 configured to cool the coils 92 with the cooling liquid. A cylindrical oil discharge port (oil drain pipe not shown) may be connected to the outlet 33B. It is desirable to provide two or more notches 323K in the circumferential direction, but one is also acceptable. The flow path 6 includes a stator cooling passage 61 formed outside the stator core 91 and a plurality of coil cooling passages 62 formed inside the stator core 91.

Since the cooling liquid moves to the first space 14 and comes into contact with the surfaces of coil end portions 92A of the coils 92, and further moves to the in-slot space 15 and comes into contact with the surfaces of the coils 92 in the coil cooling passages 62, the cooling liquid can directly absorb the heat generated by copper loss in the coils 92, thereby efficiently cooling the coils 92.

Further, in FIG. 3, the cooling liquid is allowed to flow through the stator cooling passage 61 and is then allowed to flow to the coil cooling passages 62. Thus, the flow paths inside and outside the stator core 91 can be made into a single flow path. As a result, the pipe for the stator cooling passage 61 and the pipe for the coil cooling passages 62 can be shared, leading to miniaturization, weight reduction, and simplification of the configuration. In addition, since the pump configured to supply the cooling liquid can be included a single system, the system including the tank, the pump, and the motor can be made smaller and lighter.

Further, in FIG. 3, pipe connection surfaces for connecting the oil supply pipe configured to supply the cooling liquid and the oil discharge pipe configured to discharge the supplied cooling liquid are the same surface (an outer surface of the lid 33), which simplifies a piping work. Furthermore, since there are no pipe connection points on the housing body 32, an outer diameter of the housing 3 can be reduced. In addition, even if the cooling liquid in the flow path 6 leaks from the end plate 10 to the left side in the axial direction in FIG. 3, it will only move to the second space 16 for discharging the cooling liquid, and will not directly leak to the outside of the housing 3, which improves reliability of the sealing structure. Parts not described with reference to FIG. 3 are the same as those shown in FIG. 1 and are designated by the same reference numerals as in FIG. 1 with the descriptions thereof omitted.

### <Fourth Embodiment>

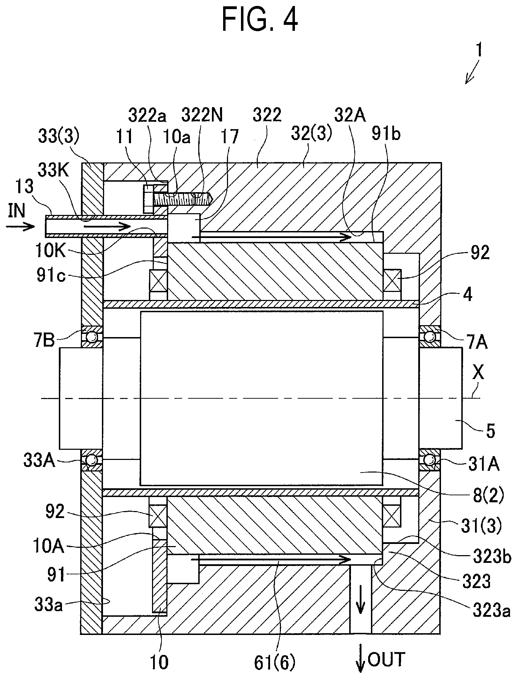

The fourth embodiment is shown in FIG. 4. The fourth embodiment is a partial modification of the third embodiment (FIG. 3). A difference from the third embodiment is that the annular stator cooling passage 61 constituting the flow path 6 has an annular buffer portion 17. The buffer portion 17 refers to a passage in which a cross-sectional area of a cross-section perpendicular to a direction in which the cooling liquid flows is enlarged. Further, in the fourth embodiment, the cooling liquid that flows through the stator cooling passage 61 toward one axial end side (right side) does not flow toward the coil 92 shown in FIG. 3, but flows toward the cooling liquid outlet OUT (as in FIG. 1) formed on one axial end side (right side) at the lower portion of the housing body 32 and is discharged to the outside of the housing 3.

The buffer portion 17 is formed around the entire circumference of the inlet side end portion of the stator cooling passage 61 that receives the cooling liquid. A cross-sectional area of the buffer portion 17 may be any size as long as it is larger than the cross-sectional area of other portions of the stator cooling passage 61. Further, a length of the buffer portion 17 in the direction in which the cooling liquid passes (in a depth direction (axial direction)) is not limited to the length shown in FIG. 4. By providing the buffer portion 17, a retention space whose fluid resistance is smaller than that of a flow path portion of the stator cooling passage 61 having a smaller cross-sectional area is created. The cooling liquid is temporarily held in the buffer portion 17, and then flows through the stator cooling passage 61. Thus, the cooling liquid can be supplied at a uniform flow rate to the stator cooling passage 61, which is a flow path connected through the buffer portion 17. Furthermore, by providing the buffer portion 17 at the inlet end side of the stator cooling passage 61 that receives the cooling liquid as shown in FIG. 3, the cooling liquid can be allowed to flow relatively evenly through the plurality of coil cooling passages 62, which are flow paths with a large (high) fluid resistance (e.g., flow paths in the coil slots). In the present embodiment, the buffer portion 17 is formed with the same cross-sectional area from a start point to an end point in the direction in which the cooling liquid flows, but the buffer portion 17 may be formed so that the cross-sectional area increases or decreases from the start point to the end point. Changing the cross-sectional area in the direction in which the cooling liquid flows in this way may improve heat transfer. Parts not described with reference to FIG. 4 are the same as those shown in FIGS. 1 and 3, and are designated by the same reference numerals as in FIGS. 1 and 3 with the descriptions thereof omitted.

The present disclosure is not limited to the embodiments described above, and various modifications may be made without departing from the spirit of the present disclosure.

For example, in the first embodiment (FIG. 1), a plurality of flat electromagnetic steel plates having an outer diameter larger than the outer diameter of the stator core 91 (e.g., an outer diameter approximately equal to the outer diameter of the end plate 10) are stacked at the axial left end of the stator core 91 to form a core stack portion having a large outer diameter, and this core stack portion is sandwiched between the axial left end surface 322a of the thick-walled portion 322 and the end plate 10. Each electromagnetic steel plate has a through-hole through which a bolt 11 passes. In this sandwiched state, the bolt 11 may be passed through the core stack portion and then threadedly fitted into the thread portion 322N of the thick-walled portion 322 to fix the end plate 10 to the housing 3. By interposing the core stack portion between the thick-walled portion 322 and the end plate 10 in this way, no gap is created between the end plate 10 and the axial left end surface 322a of the thick-walled portion 322, and a stress on the end plate 10 is suppressed. Since this reduces an amount of deformation of the end plate 10, it is possible to make the end plate 10 thinner and thus lighter.

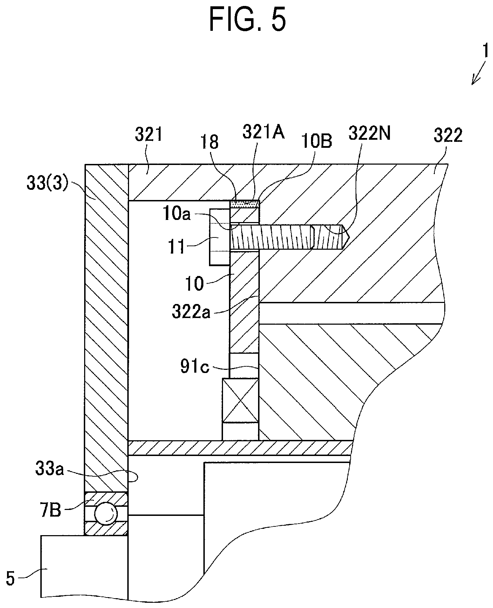

Alternatively, a configuration shown in FIG. 5 may be adopted. In the configuration of FIG. 5, an adhesive layer 18 is formed between a radial outer surface 10B of the end plate 10 and a radial inner surface 321A of the thin-walled portion 321 in FIG. 1, thereby suppressing radial displacement of the end plate 10. This adhesive layer 18 may be formed over the entire circumference of the end plate 10, or may be formed only on a specific portion in the circumferential direction.

In the first to fourth embodiments described above, the inner rotor type motor is used, but an outer rotor type motor may also be used. In the case of the outer rotor type motor, an inside and outside relationship of the rotor and stator in the radial direction is reversed from that of the embodiments described above.

In the first and second embodiments described above, the partition wall 4 is provided, but the partition wall 4 may be omitted.

Further, in the third embodiment described above (FIG. 3), the cooling liquid is allowed to flow through the stator cooling passage 61 and then flow through the coil cooling passages 62, but conversely, the cooling liquid may be allowed to flow through the coil cooling passages 62 and then flow through the stator cooling passage 61. In this case, by allowing the cooling liquid, which is kept at a low temperature, to first flow through the coil cooling passages 62, the coil 92, which generates more heat than other parts, may be further cooled.

Further, in the third embodiment described above (FIG. 3), the pipe for the stator cooling passage 61 and the pipe for the coil cooling passages 62 are shared so that the cooling liquid flows from the stator cooling passage 61 to the coil cooling passages 62, but a pipe (not shown) or a cooling passage (not shown) for forming the coil cooling passages, through which a different cooling liquid that does not mix with the cooling liquid in the stator cooling passage 61 flows, may be provided in the housing 3. In this case, if the housing 3 is configured to exchange heat between the stator cooling passage 61 and the pipe or cooling passage in the housing 3, the housing 3 can function as a heat exchanger, such that the system including the tank 101, the pump 102, and the motor 1 (*see* FIG. 10) can be made smaller and lighter. In addition, since the housing 3 itself acts as a heat exchanger, efficiency of heat exchange due to pipe losses can be improved compared to a system in which a separately provided heat exchanger is connected by pipes.

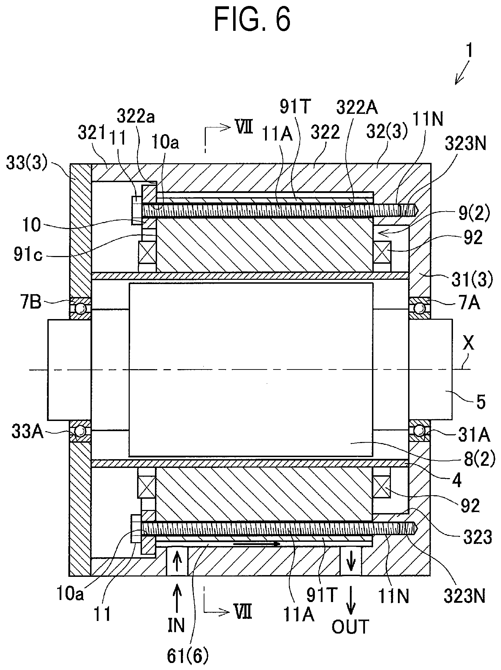

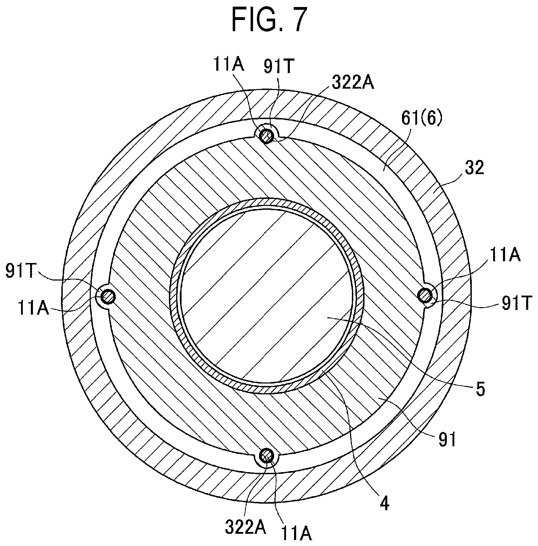

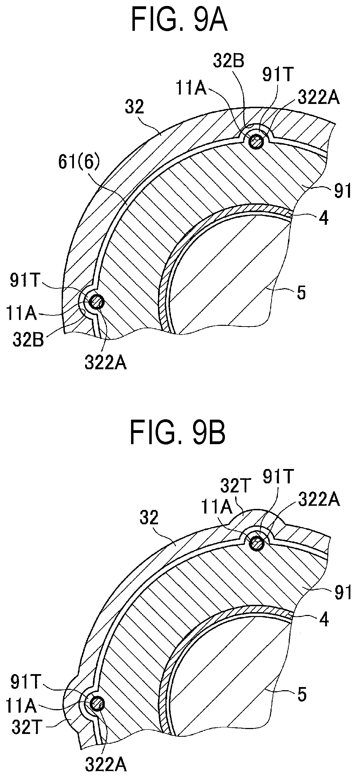

Further, configurations shown in FIGS. 6 and 7 may be adopted. In other words, in the configurations shown in FIGS. 6 and 7, a plurality of bulging portions 91T that bulge radially outward from the outer circumferential surface of the stator core 91 in an arc shape (or triangular shape, trapezoidal shape, rectangular shape, etc.) are provided in the circumferential direction (four bulging portions are provided in FIG. 7, but any number of two or more is acceptable). Bolt through-holes 322A through which the shaft portions 11A of the bolts 11 can pass are formed in these bulging portions 91T. Thread holes 323N for thread coupling with the thread portions 11N formed at the tips of the bolts 11 passed therethrough are formed in the stepped portion (right end in FIG. 6) 323 of the housing 3. By forming the bolt through-holes 322A in this way, it is possible to lengthen the shaft portions of the bolts 11, so that the bolt 11 can be elastically deformed, which leads to suppressing the bolts 11 from being loosened. Furthermore, by forming the bulging portions 91T, it is not necessary to increase the outer diameter of the stator core 91 to form the bolt through-holes 322A, thereby preventing an increase in the weight of the stator core 91. Alternatively, the housing body 32 may be configured as shown in FIG. 9A. Specifically, in FIG. 9A, recesses 32B recessed radially outward are formed on an inner surface of the housing body 32 shown in FIG. 7, which corresponds to the bulging portions 91T of the stator core 91. Thus, the housing body 32 can be brought closer to the outer surface of the stator core 91, thereby reducing outer dimensions of the housing body 32 and making the housing body 32 lighter. Furthermore, the housing body 32 may also be configured as shown in FIG. 9B. In FIG. 9B, protrusions 32T bulging radially outward to accommodate the bulging portions 91T of the stator core 91 are formed on the housing body 32. In this case, since the thickness of the housing body 32 between adjacent protrusions 32T and 32T in the circumferential direction can be made approximately equal to the thickness of the protrusions 32T, it is possible to further reduce the weight of the housing body 32 compared to FIG. 9A.

Furthermore, in the configuration shown in FIG. 2, the sealing member 12 is arranged radially inward of the bolts 11 (between the housing 3 and the end plate 10) in the motor, but the sealing member 12 may also be arranged radially outward of the bolts 11 (or both radially inward and outward of the bolts 11) in the motor. Additionally, if the sealing member is configured to cover an outer edge of the bolt hole 10a, and the sealing member is arranged in a ring shape having holes through which the shaft portions of the bolts 11 can be inserted, it is possible to reduce the space required for the sealing member, thereby reducing a radial thickness of the housing and further reducing a weight thereof. Configurations not described with reference to FIGS. 6 and 7 are the same as those shown in FIG. 1, and are designated by the same reference numerals as those in FIG. 1 with the descriptions thereof omitted.

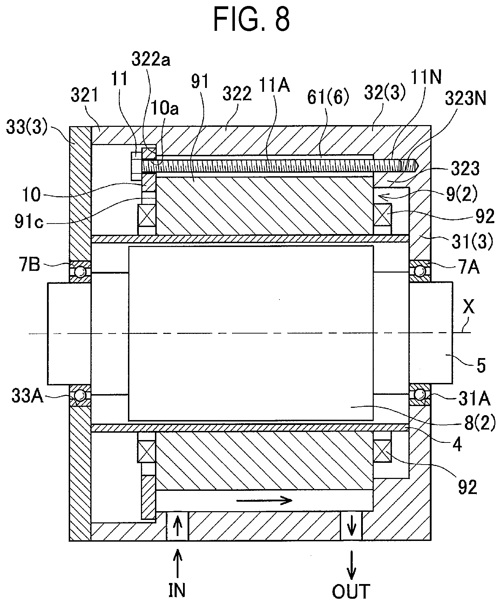

Alternatively, the configuration shown in FIG. 8 may be adopted. That is, FIG. 8 shows a case where the flow path 6 (stator cooling passage 61) shown in FIG. 1 also serves as bolt through-holes. This configuration has an advantage of making it easier to manufacture compared to the case where the bolt through-holes are formed separately from the flow path 6. Further, similar to FIG. 6, thread holes 323N for thread coupling with the thread portions 11N formed at the tips of the bolts 11 passing through the flow path 6 are formed in the stepped portion (right end of FIG. 8) 323 of the housing 3. In addition, although FIG. 8 shows one bolt 11, it is preferable to provide a plurality of (two or more) bolts. Configurations not described with reference to FIG. 8 are the same as those shown in FIG. 1, and are designated by the same reference numerals as those in FIG. 1 with the descriptions thereof omitted.

Further, in the first to fourth embodiments, the housing 3 is made of a single metal material, but a portion of the housing 3 including the stepped portion 323, which is arranged in such a positional relationship with the stator core 91 that a force due to a difference in linear expansion can be generated, may be made of a material having a coefficient of linear expansion different from that of the material constituting the stator core 91, and another portion of the housing 3 may be made of another material different from the above-described material. In some cases, the housing 3 may be made of synthetic resin. Furthermore, in the first to fourth embodiments, the stator core 91 is made of a single metal material, but a portion of the stator core 91 arranged in a positional relationship with the housing 3 such that a force due to the difference in linear expansion can be generated, i.e., an axial end portion (right end portion in FIGS. 1 to 4) of the stator core 91 that contacts the stepped portion 323 of the housing 3, may be made of a material having a coefficient of linear expansion different from that of the material that constitutes the housing, and another portion excluding the axial end portion of the stator core 91 may be made of another material different from the above-described material.

The configuration and operation of the above-described embodiments are summarized below. The liquid-cooled motor 1 of the embodiment (1) includes: a housing 3; a rotor 8 configured to rotate about an axis X with respect to the housing 3; a stator 9 fixed to the housing 3 and configured to generate a magnetic force for the rotation with respect to the rotor 8, at least a portion of the stator 9 being made of a material having a coefficient of linear expansion different from that of the housing 3; a flow path 6 formed inside the housing 3 to allow a cooling liquid to pass therethrough; an end plate 10 provided so as to extend across end surfaces 322a and 91c of the housing 3 and the stator 9 in a direction of the axis X and arranged to face the flow path 6; and a fastening member 11 configured to generate a fastening force in a direction in which the end plate 10 is brought into close contact with the housing 3 and the stator 9.

According to an embodiment (1), a flow path 6 through which the cooling liquid passes is formed by arranging the end plate 10 so as to extend over the end surfaces of the housing 3 and the stator 9 in the direction of the axis X. By fastening the end plate 10 to the housing 3 and the stator 9 with the fastening member in a direction in which the end plate 10 is brought into close contact with the housing 3 and the stator 9, even if the housing 3 and the stator 9 are made of different materials, the cooling liquid is prevented from leaking from the flow path 6 by the end plate 10 under the fastening force. Therefore, it becomes unnecessary to increase a radial thickness of the motor 1, thereby suppressing an increase in motor mass.

Further, the liquid-cooled motor 1 of embodiment (2) as recited in the embodiment (1) may further include: a partition wall 4 provided between the rotor 8 and the stator 9 along the direction of the axis X so as to define the flow path 6, wherein the stator 9 may include coils 92, the stator 9 may include coil slots 93 extending in an axial direction to hold the coils 92, each of the coil slots 93 may include an in-slot space 15 extending along an entire axial length of the stator 9, and the in-slot space 15 may constitute a portion of the flow path 6 through which the cooling liquid passes.

According to the above-described configuration, flow paths inside and outside the stator 9 through which the cooling liquid passes, i.e., the flow path formed between the stator 9 and the housing 3 and the flow path formed in the in-slot space 15, can be combined into a single flow path 6.

Further, in the liquid-cooled motor of embodiment (3) as recited in the embodiment (1) or (2), the flow path 6 may have a buffer portion 17 in which a cross-sectional area of a cross-section perpendicular to a direction in which the cooling liquid passes is enlarged.

With the above-described configuration, since the fluid resistance in the buffer portion 17 is reduced (low), it is possible to allow the cooling liquid to flow relatively evenly through the flow path having a large (high) fluid resistance (e.g., the flow paths in the coil slots 93).

Further, in the liquid-cooled motor of embodiment (4) as recited in any one of the embodiments (1) to (3), a sealing member 12 may be provided between the housing 3 and the end plate 10 to prevent leakage of the cooling liquid.

With the above-described configuration, even if a gap is generated between the housing 3 and the end plate 10 due to the difference in the coefficient of linear expansion between the stator 9 and the housing 3 in the axial direction caused by temperature changes and the like, the gap can be filled with the sealing member 12, thereby effectively preventing leakage of the cooling liquid.

Further, in the liquid-cooled motor 1 of embodiment (5) as recited in any one of the embodiments (1) to (4), the flow path 6 may be formed inside the housing 3 to face the stator 9.

Further, in the liquid-cooled motor 1 of an embodiment (6) as recited in any one of the embodiments (1) to (5), the stator 9 may be fixed between the housing 3 and the end plate 10, such that the flow path 6 is formed by being surrounded by the stator 9, the housing 3, and the end plate 10.

Furthermore, in the liquid-cooled motor 1 of an embodiment (7) as recited in any one of the embodiments (1) to (6), the fastening member 11 may be configured to generate the fastening force in the direction of the axis X.

Furthermore, in the liquid-cooled motor 1 of an embodiment (8) as recited in any one of the embodiments (1) to (7), the housing 3 may include a housing body 32 having a side wall portion at one end and an opening at the other end in the direction of the axis X, and a lid 33 configured to close the opening of the housing body 32, the lid 33 may have an inlet through-hole 10K and an outlet through-hole 10A provided at a different position from the inlet through-hole 10K, the inlet through-hole 10K may be a portion through which a supply pipe 13 configured to supply the cooling liquid from outside the motor to the flow path 6 passes, and the outlet through-hole 10A may be in fluid communication with the flow path 6 and may be a portion through which the cooling liquid that has passed through the flow path 6 is discharged to the outside of the motor.

Furthermore, in the liquid-cooled motor 1 of an embodiment (9) as recited in any one of the embodiments (1) to (8), an end space 14 may be formed between an end of the stator 9 in the direction of the axis X and the housing 3, and the housing 3 may have a notch 323K configured to bring the flow path 6 into fluid communication with the end space 14.

Furthermore, in the liquid-cooled motor 1 of an embodiment (10) as recited in any one of the embodiments (1) to (9), the fastening member 11 may have a length extending over both ends of the stator 9 in the direction of the axis X.

Further, in the liquid-cooled motor 1 of an embodiment (11) as recited in any one of the embodiments (1) to (10), the stator 9 may include a bulging portion 91T protruding radially outward.

Furthermore, in the liquid-cooled motor 1 of an embodiment (12) as recited in the embodiment (11), the housing 3 may have a recess 32B formed radially outward of the bulging portion 91T so as to face the bulging portion 91T.

Further, in the liquid-cooled motor 1 of an embodiment (13) as recited in any one of the embodiments (1) to (12), the housing 3 may include an inlet IN and an outlet OUT for the cooling liquid, a guide pipe 103 configured to guide the cooling liquid supplied by a pump 102 from an externally provided storage 101 configured to store the cooling liquid may be connected to the inlet IN, and a discharge pipe 104 configured to return the cooling liquid, which has cooled the stator 9, to the storage 101 via a heat exchanger 105 may be connected to the outlet OUT.

As described above, according to the embodiments, since the end plate 10 can be brought into close contact with the housing 3 and the stator 9 by using the fastening member 11, even when the housing 3 and the stator 9 are made of different materials, it is possible to provide a liquid-cooled motor 1 capable of suppressing an increase in motor mass.

### EXPLANATION OF REFERENCE NUMERALS

1: motor, 2: motor part, 3: housing, 4: partition wall, 5: rotary shaft, 6: flow path, 7A, 7B: bearing, 8: rotor, 9: stator, 10: end plate, 10A: through-hole, 10B: outer surface, 10K: through-hole, 10a: bolt hole, 11: bolt (fastening member), 11A: shaft portion, 11N: thread portion, 12: sealing member, 13: oil supply port (oil supply pipe), 14: first space, 15: in-slot space, 16: second space, 17: buffer portion, 18: adhesive layer, 31: side wall portion, 31A: through-hole, 31a: end surface, 32: housing body, 32A: radial inner surface, 32B: recess, 32T: protrusion, 33: lid, 33A: through-hole, 33B: outlet, 33k: through-hole, 33a: end surface, 61: stator cooling passage, 62: coil cooling passage, 91: stator core, 91T: bulging portion, 91a: inner surface, 91b: radial outer surface, 91c: axial left end surface, 92: coil, 92A:.coil end portion, 93: coil slot, 101: storage (tank), 102: pump, 103: guide pipe, 104: discharge pipe, 105: heat exchanger, 321: thin-walled portion, 321A: inner surface, 322: thick-walled portion, 322A: bolt through-hole, 322M: groove, 322N: thread portion, 322a...axial left end surface, 323: stepped portion, 323K: notch, 323N: thread hole, 323a: vertical surface, 323b: horizontal surface, IN: inlet, OUT: outlet, X: axis

## Claims

1. A liquid-cooled motor, comprising:
a housing;
a rotor configured to rotate about an axis with respect to the housing;
a stator fixed to the housing and configured to generate a magnetic force for the rotation respect to the rotor, at least a portion of the stator being made of a material having a coefficient of linear expansion different from a coefficient of linear expansion of the housing;
a flow path formed inside the housing to allow a cooling liquid to pass through the flow path;
an end plate provided so as to extend across an end surface of each of the housing and the stator in a direction of the axis and arranged to face the flow path; and
a fastening member configured to generate a fastening force in a direction in which the end plate is brought into close contact with the housing and the stator.

2. The liquid-cooled motor of Claim 1, further comprising:
a partition wall provided between the rotor and the stator along the direction of the axis to define the flow path,
wherein the stator includes coils,
wherein the stator is provided with coil slots extending in an axial direction to hold the coils,
wherein each of the coil slots has an in-slot space extending along an entire axial length of the stator, and
wherein the in-slot space constitutes a portion of the flow path through which the cooling liquid passes.

3. The liquid-cooled motor of Claim 1, wherein the flow path has a buffer portion in which a cross-sectional area of a cross-section perpendicular to a direction in which the cooling liquid passes is enlarged.

4. The liquid-cooled motor of Claim 1, wherein a sealing member is provided between the housing and the end plate to prevent leakage of the cooling liquid.

5. The liquid-cooled motor of Claim 1, wherein the flow path is formed inside the housing to face the stator.

6. The liquid-cooled motor of Claim 1, wherein the stator is fixed between the housing and the end plate such that the flow path is formed by being surrounded by the stator, the housing, and the end plate.

7. The liquid-cooled motor of Claim 1, wherein the fastening member is configured to generate the fastening force in the direction of the axis.

8. The liquid-cooled motor of Claim 1, wherein the housing includes a housing body having a side wall portion at one end and an opening at the other end in the direction of the axis, and a lid configured to close the opening of the housing body,
wherein the lid has an inlet through-hole and an outlet through-hole provided at a different position from the inlet through-hole,
wherein the inlet through-hole is a portion through which a supply pipe configured to supply the cooling liquid from an outside of the motor to the flow path passes, and
wherein the outlet through-hole is in fluid communication with the flow path and is a portion through which the cooling liquid that has passed through the flow path is discharged to the outside of the motor.

9. The liquid-cooled motor of Claim 1, wherein an end space is formed between an end of the stator in the direction of the axis and the housing, and
wherein the housing has a notch configured to bring the flow path into fluid communication with the end space.

10. The liquid-cooled motor of Claim 1, wherein the fastening member has a length extending over both ends of the stator in the direction of the axis.

11. The liquid-cooled motor of Claim 1, wherein the stator includes a bulging portion protruding radially outward.

12. The liquid-cooled motor of Claim 11, wherein the housing has a recess formed radially outward of the bulging portion to face the bulging portion.

13. The liquid-cooled motor of Claim 1, wherein the housing includes an inlet and an outlet for the cooling liquid,
wherein a guide pipe configured to guide the cooling liquid supplied by a pump from an externally provided storage configured to store the cooling liquid is connected to the inlet, and
wherein a discharge pipe configured to return the cooling liquid, which has cooled the stator, to the storage via a heat exchanger is connected to the outlet.
